Europäisches Patentamt

(19) European Patent Office  (11) Publication number: **0 049 497**

Office européen des brevets  **B1**

(12) **EUROPEAN PATENT SPECIFICATION**

(45) Date of publication of patent specification: **24.04.85**  (51) Int. Cl.⁴: **A 23 F 5/18,** A 23 F 3/20, B 01 D 13/02 // A23L2/30

(21) Application number: **81107864.1**

(22) Date of filing: **02.10.81**

(54) **Electrodialysis of food products.**

(30) Priority: **03.10.80 US 193833**
**14.05.81 US 263693**

(43) Date of publication of application:
**14.04.82 Bulletin 82/15**

(45) Publication of the grant of the patent:
**24.04.85 Bulletin 85/17**

(84) Designated Contracting States:
**AT BE CH DE FR GB IT LI NL SE**

(56) References cited:
**US-A-3 165 415**
**US-A-3 369 906**

(73) Proprietor: **SOCIETE DES PRODUITS NESTLE S.A.**
**Case postale 353**
**CH-1800 Vevey (CH)**

(72) Inventor: **Husaini, Saeed Ahmad**
**18149 Timberlane Road**
**Marysville Ohio 43040 (US)**

Courier Press, Leamington Spa, England.

## Description

The present invention relates to a method for modifying the acidity and ion content of a food product by electrodialysis.

It is sometimes desirable to reduce the acidity of certain food products. For example, instant coffee with a reduced acid content is particularly suitable for people who suffer from gastric hyperacidity. Also some citrus juices have a relatively high acid content and consequently a sour taste. Normally, sugar is added to mellow the taste but sugar increases the calorie intake. If the acidity were reduced the taste would become mellow without requiring added sugar and therefore the calorie intake would not be increased. One object of this invention is to reduce the acidity of a food product without increasing the calorie content.

It is also sometimes desirable to increase the acidity or reduce mineral or ash content of certain foodstuffs. For example, one of the major obstacles to the use of whey solids in human nutrition is the high mineral or ash content. Also coffee with a reduced potassium content would be desirable for malfunctioning kidney sufferers. Another object of this invention is to reduce the mineral or ash content and at the same time increase the acidity of a food product, without removing the anions.

Electrodialysis is a well known process for the removal of electrolytes from a colloidal solution which basically entails applying an electric field between electrodes in pure water outside two dialysing membranes of opposite charge between which is contained the colloidal solution from which the electrolytes are to be removed. In this process the negatively-charged membrane is cation-permeable and the positively-charged membrane is anion-permeable: the cation-permeable membrane allows the diffusion of cations towards the cathode but being negatively-charged it repels the anions, whereas the anion-permeable membrane allows the diffusion of anions towards the anode but being positively-charged it repels the cations. However, in this process both cations and anions are removed from the colloidal solution and the acidity therefore remains unchanged.

The demineralisation of whey by electrodialysis has been described by R.A.M. Delaney in The Australian Journal of Dairy Technology, March 1976, pp 12—14. In this process there is a series of compartments divided by alternate anion-permeable and cation-permeable membranes with streams of aqueous whey and water flowing through alternate compartments. When an electric field is applied the cations in the whey migrate towards the cathode through the cation-permeable membranes into the water streams and the anions in the whey migrate towards the anode through the anion-permeable membranes into the water streams. In this process also anions are removed as well as cations, and the acidity remains unchanged.

The processes described above require the presence of both positively-charged and negatively-charged dialysing membranes in the system. However, electrodialysis processes are also known in which all the dialysing membranes in the system have the same charge and such processes are described in United States Patents Nos. 3165415 and 3369906. USP 3165415 describes methods of increasing or reducing the acidity of a plant juice using systems in which all the membranes are cation-permeable or anion-permeable respectively. USP 3369906 describes a method of modifying the ion content of tea extract using two electrodialysis stacks one in which all the membranes are anion-permeable and the other in which all the membranes are cation-permeable. In these processes the feed stream i.e. the stream containing the food product, is separated by the membrane from a waste steam which contains a dilute aqueous acidic solution when the membrane is cation-permeable and a dilute aqueous basic solution when the membrane is anion-permeable. However, the food products treated by the processes of these two patents have a very low soluble solids content. The fruit or vegetable juices described in USP 3165415 have a soluble solids content of less than 1% by weight, while the tea extract formed by extracting tea at 160°F described in USP 3369906 at col. 1 lines 47—52 has a solids content of only 0.1 to 0.3% by weight. It is well known that dilute liquors having a low viscosity are unlikely to foul up the membranes. Thus, fruit juices contain small molecules of sugars, acids and other compounds in solution which do not foul up the membranes. The pulp suspended in fruit juice, however, is too course to penetrate the membrane pores and accordingly does not contribute to fouling. It would, nevertheless, be desirable to be able to use a similar electrodialysis process to reduce or increase the acidity and/or reduce the mineral content of more concentrated food products such as coffee extracts and concentrated tea extracts. However, in complete contrast to fruit and vegetable juices, a material such as coffee extract contains many large molecules of carbohydrates, proteins and their interaction products which are formed during roasting, and these large molecules form a true colloidal solution which would be expected to foul up the membranes. Nevertheless, contrary to all expections, we have surprisingly found that such materials having a relatively high soluble solids content and of a totally different nature to fruit and vegetable juices do not, in fact, foul up the membranes in an electrodialysis process in which all the dialysing membranes in the system have the same charge, and this has not been appreciated until the present invention was developed.

The present invention provides a process for modifying the acidity and ion content of an aqueous extract of coffee, tea or grain having a soluble solids content of from 7% to 35% by weight by electrodialysis in a system comprising a pair of electrodes and two or more membranes which are either exclusively cation-permeable or exclusively anion-permeable, wherein a feed stream is separated by a membrane from a waste stream the latter containing a dilute aqueous acidic solution when the membranes are cation-permeable and a dilute aqueous basic solution when the membranes are anion-permeable, to which system the application of an electric field between the electrodes causes migration through the membranes of either protons or hydroxyl ions out of the waste stream into the feed stream and either cations or anions respectively out of the feed stream towards their respective attracting electrodes.

For example, if there are just two membranes in the system, the feed stream may flow through the compartment formed by the space between the membranes. Where there are more than two membranes in the system, both feed and waste streams may flow respectively through separate compartments formed by the spaces between adjacent membranes.

In one embodiment of the process according to the present invention the acidity of a food product may be reduced when the membranes are anion-permeable and the waste stream contains a dilute aqueous basic solution, wherein the application of an electric field causes migration of hydroxyl ions out of the waste stream into the feed stream and anions out of the feed stream towards the anode, for example into the waste stream.

The basic solution in the waste stream may comprise any hydroxide capable of producing soluble hydroxyl ions in the system or another base, salt or oxide which is basic in aqueous solution for example potassium carbonate, sodium carbonate, potassium oxide, sodium oxide, potassium peroxide, sodium peroxide or organic bases such as methylamine, ethylamine or propylamine. Solutions of compatible mixtures of bases, basic salts or bases and basic salts may also be used. Preferably, however the basic solution comprises a free base, especially ammonium hydroxide or an alkali metal hydroxide such as potassium hydroxide.

The concentration of the base in the waste stream depends inversely on the strength of the base used and may be from 0.05% to 10% preferably 0.1% to 0.5% on a weight/weight basis for a strong alkali metal hydroxide such as potassium hydroxide and from 1% to 25% preferably 2% to 4% on a weight/weight basis for a weaker hydroxide such as ammonium hydroxide. In this embodiment of the invention, as the membranes are positively charged, the migration of protons and cations towards the cathode is repelled and the hydroxyl ions which have migrated out of the waste stream combine with the free hydrogen ions remaining in the feed stream to form water, thus reducing the acidity of the food product. This embodiment may be used to reduce the acidity of an extract of green or roasted coffee, a grain extract, or a tea or coffee product admixed with a grain, chocolate or chicory product. In particular, this embodiment may be used to reduce the acidity of coffee liquors which may or may not be decaffeinated, and is especially valuable for reducing the acidity of instant coffee. The acids removed from the coffee are usually of low molecular weight for example formic, acetic, oxalic, malic and citric acids. Generally chlorogenic acid and caffeine are not removed.

In another embodiment of the process according to this invention, the mineral content of a food product may be reduced and the acidity correspondingly increased when the membranes are cation-permeable and the waste stream contains a dilute aqueous acidic solution, wherein the application of an electric field causes protons to migrate out of the waste stream into the feed stream and cations to migrate out of the feed stream towards the cathode, for example into the waste stream.

The acidic solution in the waste stream may comprise a mineral or organic acid, or a salt which is acidic in aqueous solution. Examples of acids are nitric, sulphuric, hydrochloric, phosphoric, formic, acetic, citric, oxalic, malic, tartaric or ascorbic acid. Examples of salts are ammonium chloride, ammonium sulphate, monobasic and dibasic salts or citric and phosphoric acids and the monobasic salts of oxalic acid. Solutions of compatible mixtures of acids, acidic salts, or acids and acidic salts may be used. However, it is preferable to use a free acid in the waste stream. The concentration of the acid used depends inversely on its strength and when a strong acid such as phosphoric acid is used the concentration may be from 0.05% to 10%, preferably from 0.1% to 0.4% on a weight/weight basis and when a weak acid such as acetic acid is used the concentration may be from 1% to 35%, preferably from 2% to 10% on a weight/weight basis.

When the food product is a coffee extract or a mixture containing a coffee extract a particularly desirable acidic solution which may be used in the waste stream is the evaporator condensate. The evaporator condensate is obtained from aqueous coffee extract, usually containing from 15 to 22% solids, which is first stripped to remove volatile aroma components and then subjected to evaporation, usually a multistage evaporation, so that it is concentrated to a solids content of about 55%. In the evaporation step, volatile acids that were not removed in the preceding aroma stripping are evolved, and at the same time, some non-volatile coffee components interact and break down, giving rise to additional volatile acids which are also evolved along with water vapour. These volatile acids and water vapour thus removed from the coffee liquor are condensed into what is generally called the evaporator condensate.

The main acids present in evaporator condensates are formic, acetic, propanoic, butanoic, pentanoic, 3-hexanoic, lactic, octanoic and decanoic acids. The concentration of the organic acids in the evaporator condensates is usually not more than 0.15% titratable acids expressed as acetic acid. However, since the acids present in the evaporator condensates are derived from coffee, the use of such condensates helps to preserve the natural image of the coffee.

In this embodiment, as the membranes are negatively-charged the migration of anions towards the anode is repelled. The departure of cations from the feed stream reduces the mineral content and the entry of protons increases the acidity. If reduction of the mineral content is the primary objective, the increase in acidity is a secondary result and vice versa. This embodiment may be used to reduce the mineral content of food products such as an extract of green or roasted coffee, tea, grain extracts and any mixture of these

3

substances or any mixture of one or more of these substances with a fruit juice or vegetable extract. The tea extract is preferably prepared by extraction with water at a temperature of at least 75°C and preferably from 80°C to 120°C. Preferably acidic or basic material used in the waste stream has low cost, low toxicity, no deleterious effect on the organoleptic properties of the food, no attack on the membranes and is acceptable as a food additive.

The process of this invention is generally carried out in an electrodialysis unit several types of which are commercially available, in which the system comprises a multiplicity of membranes forming a membrane stack wherein the feed and waste streams both flow respectively through separate compartments formed by the spaces between adjacent membranes. Preferably, the feed and waste streams flow respectively through alternate compartments and desirably the waste stream flows through the compartments next to each electrode compartment.

In practice, a third current conducting stream known as the electrode stream advantageously flows through the electrode compartments of the system. The electrode stream is either water, a dilute aqueous acidic solution if the waste stream is acidic or a dilute aqueous basic solution if the waste stream is basic. The electrode stream may contain any of the acidic or basic materials which may be present in the waste stream and it may or may not have the same composition and/or concentration as the waste stream. The presence of the electrode stream reduces contamination of the feed by the products of the electrode reactions. Either the waste stream or the feed stream may flow through the compartments adjacent to the electrode stream.

When the feed stream flows through the compartments next to the electrode stream, the latter is preferably water or a solution of a free acid or a free base. The cations or anions which migrate out of the feed stream when an electric field is applied, flow towards their respective attracting electrodes into the electrode stream.

When the waste stream flows through the compartments next to each electrode stream, this has the effect of further minimising contamination of the feed by the products of the electrode reactions. In this case the electrode stream conveniently has the same composition as the waste stream.

The flow rate of the electrode stream is not critical but should be fast enough to sweep off the pockets of oxygen and hydrogen gas liberated at the electrodes.

Advantageously, the feed and waste streams flow through their respective compartments in parallel in order to minimise electrical and mechanical resistance for either a co-current or countercurrent flow, but preferably a co-current flow.

The streams may be recirculated through the system several times until the desired degree of acid modification is achieved and although the time taken is not critical, it is preferably not more than 2 hours for practical and economic reasons.

The following parameters affect the rate of modification of the acidity and ion content of the food product.

a) The solids content of the feed stream is from 7 to 35% by weight. Above 35% solids content the rate decreases because the feed stream tends to form stagnant layers over the membrane surface because of its high viscosity;

b) the rate increases when the flow through the compartments becomes more turbulent. Turbulent flow not only reduces the formation of stagnant layers over the membrane surface but also minimises the deposit of solid matter from the feed stream on the membranes, particularly coffee solids during the acidity modification of coffee;

c) within limits the rate increases with increasing flow rate. However it is not advisable to increase the flow rate beyond the maximum operating pressure recommended by the supplier of the electrodialysis unit. The flow rates of the feed and waste streams may be from 2.25 to 45.5 preferably from 7 to 23, and especially from 16 to 21 kilograms per minute;

d) the rate increases with increasing temperature. However, temperatures above approximately 40°C shorten the membrane life and generally the operating temperature is from 4°C to 98°C, preferably from 24°C to 65°C, and optimally 32°C to 43°C;

e) the rate increases with increasing current up to a maximum and then decreases. The optimum current depends on a variety of factors such as membrane area, temperature, and resistivity of the membranes as well as of the electrode, feed and waste streams. However, the current actually used may be somewhat above or below the optimum and expressed as current density is conveniently from 0.7 to 170 amps and preferably from 20 to 140 amps per sq. metre surface area of a single membrane.

f) the rate increases with increasing concentration of the acid or hydroxide in the waste stream because increased concentration of acid or hydroxide causes greater flux of protons or hydroxyl ions through the membrane from the waste stream. However, if the acid or hydroxide concentration becomes too high, the membrane life is shortened and increases the possibility of anion or cation leakage respectively into the feed stream;

g) when other factors remain the same, the rate is directly proportional to the total surface area of the membranes in the system which in turn depends on the area of each membrane and the number of membranes in the system. Commercially available electrodialysis units come in various sizes and contain varying numbers of membranes in the stack for example from 30 to several thousand. The surface area of each membrane may vary within wide limits for example from 0.0232 to 0.500 square metre and the total surface area of the membrane stack may be for example from 0.2 to 500 square metres depending on the requirements;

h) the rate is gradually reduced by the build up of salts in the waste stream during the process even when the acid or hydroxide concentration is maintained at its original level.

Because of the great difference in the solids content of the feed stream and the waste stream, there is an osmotic flow of water from the waste stream into the feed stream. To compensate for this, a back pressure may be applied on the feed stream, for example at the point of discharge from the membranes. The back pressure is generally from 70 to 700 g per sq. cm.

After each run not only does the feed stream need replenishing with fresh food product and the waste stream with acid or hydroxide but the electrode stream also requires replenishing as it becomes slightly depleted. Moreover, it is desirable to clarify the cell extract to remove suspended matter that abrades and settles on the membranes.

The electrodialysis process may be carried out batchwise or continuously by conventional methods.

After the acidity and ion content have been modified in accordance with this invention, the food product may subsequently be processed by conventional means.

The following examples further illustrate the present invention in which the equipment used in Examples 1 to 6 and 8 to 11 was a Mark II, 45 cm×50 cm Electrodialysis Unit by Ionics Inc. Watertown, Massachusetts. In Examples 1 to 5, 64#204-UZL anion-permeable membranes and tortuous path spacers, each with a surface area of 1624 sq. cm, and having a total surface area of 10.4 sq. metres were used, and in Examples 6 to 8 to 11, 34#61-CZL cation-permeable membranes and tortuous path spacers each with a surface area of 1624 sq. cm were used. In Example 7, a 22.5 cm×25 cm Electrodialysis unit, also by Ionic Inc. was used in which 50#61 CZL cation-permeable membranes and tortuous path spacers each with a surface area of 232 sq. cm were used.

The titration of the acids and the pH measurements were carried out in the following manner. Two gram solids of the extract or powder were diluted with deionized water to give a 1% solution which was titrated with 0.1 N NaOH on a pH meter to pH 7.0. The results are expressed as milligrams of acetic acid per gram of coffee solids. The pH was determined in a 1% solution. Both the pH measurements and titration were carried out at room temperature. The current density is expressed as amps/square metre of a single membrane.

The percentages in the Examples are by weight.

Example 1

Coffee extract containing 17.3% solids was steam stripped to remove volatile aroma components. The stripped extract had a pH of 4.2 and contained 32.0 mg of titratable acidity as acetic acid per gram of solids before electrodialysis. A portion of the stripped extract was processed and spray dried in the conventional manner (no electrodialysis) to serve as a control. The control spray dried powder had a pH of 4.7 and contained 30.05 mg of titrable acidity as acetic acid per gram of solids. Another 100 kg of the same stripped cell extract containing 17.3% solids was deacidified by electrodialysis under the following conditions:

| | |
|---|---|
| Operating temperature | = 38°C |
| Current | = 16 amperes |
| Current density | = 107.7 amps/sq. metre |
| Feed flow | = 18.6 kg/min |

200 kg of 0.3% aqueous potassium hydroxide was placed in the waste tank and 100 kg of 0.3% aqueous potassium hydroxide in the electrode tank.

| | |
|---|---|
| Waste flow | = 18.6 kg/min |
| Electrode flow | = 7.7 kg/min |

The three streams were recirculated through the membrane stack for one hour. The feed stream then had a pH of 5.3 and titratable acids equivalent to 10.8 mg acetic acid per gram solids, indicating that 66.3% of the titratable acids were removed. The electrodialyzed extract was processed and spray dried in the usual manner. The low acid powder had a pH of 5.3 and titratable acids equivalent to 15.2 mg acetic acid per gram solids. Compared with the control powder, the low acid powder contained 49.4% less acids.

Example 2

Coffee extract containing 14% solids was steam stripped to remove volatile aroma components. The stripped extract had a pH of 4.6 and titratable acids equivalent to 24.9 mg acetic acid per gram of solids. A portion of this stripped extract was processed and spray dried in the conventional manner (no electrodialysis) to serve as a control. This control spray dried powder had a pH of 4.7 and titratable acids equivalent to 24.7 mg acetic acid per gram solids.

A 200 kg batch of the same stripped extract was electrodialyzed against 0.3% potassium hydroxide as described in Example 1. After 1 hour and 20 minutes, the extract had a pH of 6.95 and titratable acids equivalent to 0.3 mg acetic acid per gram solids, that is 98.8% less acids than the starting extract. The low acid extract was processed and spray dried in the usual manner. The low acid powder had a pH of 6.00 and titratable acids equivalent to 6.28 mg acetic acid per gram solids. The low acid powder contained 74.6% less acids than the control powder.

Example 3

An extract of decaffeinated coffee beans containing 14.7% solids was steam stripped to remove volatile aroma components. The pH of the stripped extract was 4.75 and contained titratable acids equivalent to 24.8 mg acetic acid per gram solids. A part of this extract was spray dried without electrodialysis to serve as a control. This control powder showed a pH of 4.80 and titratable acids equivalent to 23.40 mg acetic acid per gram solids. A 200 kg batch of the stripped decaffeinated extract was deacidified by electrodialysis against 0.3% potassium hydroxide as described in Example 1. After 1 hour and 25 minutes the extract had a pH of 6.45 and titratable acids equivalent to 4.20 mg acetic acid per gram solids, that is 83.1% less acids than the starting extract. The low acid extract was processed and spray dried in the usual way. The low acid powder showed a pH of 6.05 and titratable acids equivalent to 6.83 mg acetic acid per gram solids, that is 70.8% less acids than the control powder.

Example 4

An extract of decaffeinated coffee beans containing 15.2% solids was steam stripped to remove volatile aroma components. The pH of the stripped extract was 4.30 and contained titratable acids equivalent to 37.65 mg acetic acid per gram of solids. A part of this extract was spray dried without electrodialysis to serve as a control. This control powder had a pH of 4.65 and titratable acids equivalent to 26.65 mg acetic acid per gram of solids. A 200 kg batch of the stripped decaffeinated extract was electrodialyzed under the following conditions:

| | |
|---|---|
| Operation temperature | = 38°C |
| Current | = 12 amperes |
| Current density | = 80.75 amps/sq. metre |
| Feed flow | = 11.4 kg/min |

100 kg of 2% ammonium hydroxide was placed in each of the electrode and waste tanks.

| | |
|---|---|
| Waste flow | = 11.4 kg/min |
| Electrode flow | = 7.7 kg/min |

The streams were recirculated through the membrane stack for 1.5 hours. The feed stream now had a pH of 5.50 and titratable acids equivalent to 12.90 mg acetic acid per gram solids, that is 65.7% less acids than the starting extract. The electrodialyzed extract was processed in the usual manner. The low acid powder showed a pH of 5.50 and titratable acids equivalent to 13.20 mg acetic acid per gram solids, that is 50.5% less acids than the control powder.

Example 5

An extract of decaffeinated coffee beans and roasted chicory containing 7% solids and composed of a mixture of equal parts of coffee and chicory solids was steam stripped to remove volatile aroma components. The pH of the stripped extract was 4.5 and it contained titratable acids equivalent to 22.42 mg acetic acid per gram of solids. A part of this stripped extract was spray dried in the usual manner (no electrodialysis) to serve as a control. The spray dried powder had a pH of 4.65 and titratable acids equivalent to 18.6 n.g acetic acid per gram of solids. A 157 kg batch of the same stripped extract was electrodialyzed against 0.4% potassium hydroxide under the following conditions:

| | |
|---|---|
| Operating temperature | = 38°C |
| Current | = 7 amperes |
| Current density | = 47.1 amps/sq. metre |
| Feed flow | = 20 kg/min |

200 kg of 0.4% potassium hydroxide in the waste tank and 100 kg of 0.4% potassium hydroxide in the electrode tank.

| Waste flow | = 20 kg/min |
|---|---|
| Electrode flow | = 10 kg/min |

The streams were recirculated through the membrane stack for 1 hour and 15 minutes. The feed stream then had a pH of 5.9 and titratable acids equivalent to 6.13 mg acetic acid per gram of solids, that is 72.7% less acids than the starting extract. The low acid extract was processed in the usual manner. The low acid powder had a pH of 5.6 and titratable acids equivalent to 7.5 mg acetic acid per gram of solids, that is 59.7% less acids than the control powder.

Example 6

The ash content of a tea extract was reduced in the following manner. A 100 kg batch of tea extract containing 7.5% solids, stripped beforehand to remove volatile aroma components, was electrodialyzed against 6.0% acetic acid solution under the following conditions:

| Operating temperature | = 38°C |
|---|---|
| Current | = 8 amperes |
| Current density | = 53.8 amps/sq. metre |
| Feed flow | = 10 kg/min |

100 kg of 6.0% acetic acid in each of the electrode and waste tanks

| Waste flow | = 10 kg/min |
|---|---|
| Electrode flow | = 3.6 kg/min |

The streams were recirculated through the membrane stack for two hours. The analysis of the extract before and after electrodialysis is given below:

| | Before electrodialysis | After electrodialysis |
|---|---|---|
| pH of 1% solution | 5.30 | 4.20 |
| Titratable acids, equivalent to mg acetic acid/g solids | 30.15 | 70.8 |
| Potassium, % (dry basis) | 6.35 | 5.63 |
| Calcium, mg % (dry basis) | 59.0 | 55.5 |
| Magnesium, mg % (dry basis) | 313.0 | 227.0 |
| Ash, % (dry basis) | 14.40 | 12.28 |

Thus after electrodialysis, titratable acids increased by 134.8% and the ash decreased by 2.12%. The electrodialyzed extract is processed and dried in the usual manner.

Example 7

The ash content of a coffee extract was reduced and the acidity increased by electrodialysis against a 1% aqueous citric acid solution by a batch operation under the following conditions.

Fourteen kilograms of the coffee extract containing 13.4% solids by weight were stripped to remove volatile aroma components. The stripped extract was divided into two parts. One half of the extract was electrodialyzed in a batch operation under the following conditions, while the other half served as control:

| | |
|---|---|
| Feed | = 7 kg of cell extract containing 13.4% solids by weight |
| Feed flow | = 1800 ml/min |
| Waste | = 20 litres 1% aqueous citric acid solution |
| Waste flow | = 2000 ml/min |
| Electrode | = 7.5 litres 1% aqueous citric acid solution |
| Electrode flow | = 1100 ml/min |
| Current density | = 99.0 amps/sq. metre |
| Temperature | = 23°C |
| Time | = 15 min |

The three streams were recirculated through the membrane stack for 15 minutes, whereafter the feed stream had a pH of 4.3 and titrable acids of 49.17 mg per gram of solids expressed as acetic acid. For the control extract (not electrodialyzed) the corresponding values were 4.8 and 29.56 respectively. The volatile aroma components were added back to the control and the electrodialyzed extracts and the two samples were freeze dried. The analysis of the control and electrodialyzed freeze dried powders is given below:

| | % Moisture | pH of 1% Solution | Titratable acids equiv to acetic acid mg/g | % Ash | % Potassium |
|---|---|---|---|---|---|
| Control | 5.41 | 4.7 | 28.8 | 9.43 | 3.54 |
| Electrodialyzed | 5.39 | 4.35 | 41.4 | 8.08 | 2.92 |

Example 8

A 100 kg batch of cold water soluble tea tannins, containing 10.4% solids was electrodialyzed against 0.3% phosphoric acid solution under the following conditions.

Feed: 100 kg cold water soluble tea tannins containing 10.4% solids.
Waste: 100 kg 0.3% phosphoric acid solution. The strength was periodically checked by titration and maintained at the 0.3% level by adding concentrated phosphoric acid.

| | |
|---|---|
| Electrode: | 100 kg 0.3% phosphoric acid solution |
| Operating temp | = 38°C |
| Current | = 12 amperes |
| Current density | = 80.75 amps/sq. metre |
| Feed flow | = 15 kg/min |
| Waste flow | = 17 kg/min |
| Electrode flow | = 4 kg/min |

The streams were recirculated through the membrane stack for four hours. The analysis of the feed stream before electrodialysis and after two and four hours, is given below:

|  | Before electrodialysis | After 2 hrs electrodialysis | After 4 hrs electrodialysis |
|---|---|---|---|
| pH of 1% solution | 7.4 | 5.5 | 5.2 |
| Titratable acids equivalent to mg acetic acid/g solids | — | 22.5 | 30.3 |
| Potassium, % (dry basis) | 11.71 | 9.84 | 9.31 |
| Ash, % (dry basis) | 24.38 | 20.22 | 19.07 |
| Calcium, mg % (dry basis) | 139 | 147 | 146 |
| Magnesium, mg % (dry basis) | 274 | 274 | 269 |

Thus, after four hours of electrodialysis, the pH dropped from 7.4 to 5.2, ash from 24.38% to 19.07% and potassium from 11.7% to 9.31%.

Example 9

94 kg of cell extract of coffee, previously stripped to remove volatile aroma components, containing 10.5% solids by weight (9.9 kg total solids), having an initial pH of 4.7 and titratable acidity to pH 7 equivalent to 33.7 mg acetic acid per gram solids, was electrodialysed against an evaporator condensate under the following conditions:

| Operating temperature | = 38°C |
|---|---|
| Current | = 50 amperes |
| Current density | = 300 amps/sq. metre |
| Waste stream | = 94 kg of evaporator condensate |
| Electrode stream | = 47 kg of evaporator condensate from same source as used in waste stream |
| Initial pH of evaporator condensate | = 3.2 |
| Initial titratable acids in evaporator condensate | = 0.14% expressed as acetic acid |
| Feed flow | = 6.8 kg/min |
| Waste flow | = 11.3 kg/min |
| Electrode flow | = 4.3 kg/min |

The three streams were recirculated through the membrane stack for 1½ hours, after which the coffee extract had a pH of 4.3 and titratable acids to pH 7 equivalent to 47.43 mg acetic acid per gram solids, that is a 47.4% increase in titratable acidity.

Example 10

57 kg of stripped cell extract of coffee containing 10.5% solids by weight (5.9 kg total solids), and having an initial pH of 5.1 and titratable acids to pH 7 equivalent to 21.7 mg acetic acid per gram solids, was electrodialysed against an evaporator condensate under the following conditions:

## 0 049 497

| | |
|---|---|
| Operating temperature | = 38°C |
| Current | = 25 amperes |
| Current density | = 200 amps/sq. metre |
| Waste stream | = 150 kg of evaporator condensate |
| Electrode stream | = 113 kg of evaporator condensate from same source as that used in waste stream |
| Initial pH of evaporator condensate | = 3.9 |
| Initial titratable acids in evaporator condensate | = 0.04% expressed as acetic acid |
| Feed flow | = 6.8 kg/min |
| Waste flow | = 12.3 kg/min |
| Electrode flow | = 4.3 kg/min |

The three streams were recirculated through the membrane stack for 23 minutes after which the coffee extract had a pH of 4.2 and titratable acids to pH 7.0 equivalent to 43.4 mg acetic acid per gram solids, that is a 100% increase in titratable acidity.

Example 11

56.5 kg of stripped cell extract of coffee containing 13.9% solids by weight (7.9 kg total solids), having an initial pH of 4.6 and titratable acids to pH 7 equivalent to 47.1 mg acetic acid per gram solids, was electrodialysed against an evaporator condensate under the following conditions:

| | |
|---|---|
| Operating temperature | = 39°C |
| Current | = 40 amperes |
| Current density | = 246 amps/sq. metre |
| Waste stream | = 113 kg of evaporator condensate |
| Electrode stream | = 113 kg of evaporator condensate from same source as that used in waste stream |
| Initial pH of evaporator concentrate | = 3.6 |
| Initial titratable acids in evaporator condensate | = 0.11% expressed as acetic acid |

The three streams were recirculated through the membrane stack for one hour, after which the coffee extract had a pH of 4.1 and titratable acids to pH 7.0 equivalent to 64.7 mg acetic acid per gram solids, that is a 37.5% increase in titratable acidity.

**Claims**

1. A process for modifying the acidity and ion content of an aqueous extract of coffee, tea or grain having a soluble solids content of from 7% to 35% by weight by electrodialysis in a system comprising a pair of electrodes and two or more membranes which are either exclusively cation-permeable or exclusively anion-permeable, wherein a feed stream is separated by a membrane from a waste stream, the latter containing a dilute aqueous acid solution when the membranes are cation-permeable and a dilute aqueous basic solution when the membranes are anion-permeable, to which system the application of an electric field between the electrodes causes migration through the membranes of either protons or hydroxyl ions out of the waste stream into the feed stream and either cations or anions respectively out of the feed stream towards their respective attracting electrodes.

2. A process as claimed in claim 1 for reducing the acidity of a food product as defined in which the

## 0 049 497

membranes are anion-permeable and the waste stream contains a dilute basic solution, wherein the application of an electric field causes migration of hydroxyl ions out of the waste stream into the feed stream and anions out of the feed stream towards the anode.

3. A process as claimed in claim 2 in which the hydroxide in the waste stream is ammonium hydroxide or an alkali metal hydroxide.

4. A process as claimed in claim 3 in which the hydroxide in the waste stream is potassium hydroxide.

5. A process as claimed in claim 3 or claim 4 in which the concentration of the alkali metal hydroxide in the waste stream is from 0.1% to 0.5% on a weight/weight basis.

6. A process as claimed in claim 3 in which the concentration of ammonium hydroxide in the waste stream is from 2.0% to 4.0% on a weight/weight basis.

7. A process as claimed in claim 2 in which the food product is an extract of green or roasted coffee, a grain extract or a tea or coffee product in admixture with a grain, chocolate or chicory product.

8. A process as claimed in claim 1 for reducing the mineral content or increasing the acidity of a food product as defined in which the membranes are cation-permeable and the waste stream contains a dilute acidic solution, wherein the application of an electric field causes migration of protons out of the waste stream into the feed stream and cations out of the feed stream towards the cathode.

9. A process as claimed in claim 8 in which the dilute acid in the waste stream is phosphoric acid.

10. A process as claimed in claim 9 in which the concentration of phosphoric acid in the waste stream is from 0.1% to 0.4% on a weight/weight basis.

11. A process as claimed in claim 8 in which the dilute acid in the waste stream is an evaporator concentrate.

12. A process as claimed in claim 8 in which the food product is an extract of green or roasted coffee, tea, grain extract, and any mixture of these substances or any mixture of one or more of these substances with a fruit juice or vegetable extract.

13. A process as claimed in claim 1 in which an electrode stream flows through the electrode compartments of the system.

14. A process as claimed in claim 13 in which the electrode stream has the same composition as the waste stream.

15. A process as claimed in claim 1 in which the flow through the compartments is turbulent.

16. A process as claimed in claim 1 in which the operating temperature is from 24°C to 65°C.

17. A process as claimed in claim 1 in which the current used is from 20 amps to 140 amps per square metre of a single membrane.

18. A food product with a reduced acidity whenever prepared by a process according to claim 2.

19. A food product with a reduced ash content and an increased acidity whenever prepared by a process according to claim 8.

**Patentansprüche**

1. Ein Verfahren zum Modifizieren der Acidität und des Ionengehaltes eines wässerigen Extraktes von Kaffee, Tee oder Getreide durch Elektrodialyse in einem System, das ein Paar von Elektroden und zwei oder mehrere Membranen umfaßt, die entweder ausschließlich Kation-permeabel oder ausschließlich Anion-permeabel sind, worin ein Speisestrom durch eine Membran von einem Abstrom getrennt wird, wobei der letztgenannte eine verdünnte wässerige saure Lösung enthält, wenn die Membranen Kation-permeabel sind, und eine verdünnte wässerige basische Lösung enthält, wenn die Membranen Anion-permeabel sind, in welchem System das Anlegen eines elektrischen Feldes zwischen den Elektroden eine Wanderung von entweder Protonen oder Hydroxylionen durch die Membranen aus dem Abstrom heraus in den Speisestrom hinein und von entweder Kationen oder Anionen aus dem Speisestrom heraus gegen die jeweiligen anziehenden Elektroden hin verursacht.

2. Ein Verfahren nach Anspruch 1 zur Verminderung der Acidität eines Lebensmittels, wie definiert, in welchem die Membranen Anion-permeabel sind und der Abstrom eine verdünnte basische Lösung enthält, wobei das Anlegen eines elektrischen Feldes ein Wandern von Hydroxylionen aus dem Abstrom heraus in den Speisestrom hinein und von Anionen aus dem Speisestrom heraus gegen die Anode zu verursacht.

3. Ein Verfahren nach Anspruch 2, worin das Hydroxid in dem Abstrom Ammoniumhydroxid oder ein Alkalimetallhydroxid ist.

4. Ein Verfahren nach Anspruch 3, worin das Hydroxid in dem Abstrom Kaliumhydroxid ist.

5. Ein Verfahren nach Anspruch 3 oder 4, in welchem die Konzentration des Alkalimetallhydroxids in dem Abstrom von 0,1% bis 0,5%, bezogen auf eine Gewichts/Gewichts-Basis, beträgt.

6. Ein Verfahren nach Anspruch 3, worin die Konzentration des Ammoniumhydroxids in dem Abstrom von 2,0% bis 4,0%, auf eine Gewichts/Gewichts-Basis bezogen, beträgt.

7. Ein Verfahren nach Anspruch 2, worin das Nahrungsmittel ein Extrakt von grünem oder geröstetem Kaffee, eine Getreide-extrakt oder ein Tee- oder Kaffeeprodukt im Gemisch mit einem Getreide-, Schokolade- oder Zichorieprodukt ist.

8. Ein Verfahren nach Anspruch 1 zur Verminderung des Mineralgehaltes oder zu Steigerung der Acidität eines Nahrungsmittels, wie definiert, in welchem die Membranen Kation-permeabel sind und der Abstrom eine verdünnte saure Lösung enthält, wobei das Anlegen eines elektrischen Feldes ein Wandern

11

von Protonen aus dem Abstrom heraus in den Speisestrom hinein und von Kationen aus dem Speisestrom heraus gegen die Kathode zu verursacht.

9. Ein Verfahren nach Anspruch 8, worin die verdünnte Säure in dem Abstrom Phosphorsäure ist.

10. Ein Verfahren nach Anspruch 9, worin die Konzentration der Phosphorsäure in dem Abstrom von 0,1% bis 0,4%, bezogen auf eine Gewichts/Gewichts-Basis, beträgt.

11. Ein Verfahren nach Anspruch 8, worin die verdünnte Säure in dem Abstrom ein Eindampfkondensat ist.

12. Ein Verfahren nach Anspruch 8, worin das Nahrungsmittel ein Extrakt von grünem oder geröstetem Kaffee, Tee, Getreide-extrakt oder eines beliebigen Gemisches dieser Substanzen oder eines beliebigen Gemisches einer oder mehrerer dieser Substanzen mit einem Obstsaft oder Gemüseextrakt ist.

13. Ein Verfahren nach Anspruch 1, worin ein Elektrodenstrom durch die Elektrodenabteile des Systems fließt.

14. Ein Verfahren nach Anspruch 13, worin der Elektrodenstrom die gleiche Zusammensetzung aufweist wie der Abstrom.

15. Ein Verfahren nach Anspruch 1, worin die Strömung durch die Abteile turbulent ist.

16. Ein Verfahren nach Anspruch 1, worin die Betriebstemperatur von 24°C bis 65°C beträgt.

17. Ein Verfahren nach Anspruch 1, worin die angelegte Stromstärke von 20 Ampere bis 140 Ampere/m² einer einzigen Membran beträgt.

18. Ein Lebensmittel mit einer verminderten Acidität, wenn es nach einem Verfahren gemäß Anspruch 2 hergestellt ist.

19. Ein Lebensmittel mit einem verminderten Aschegehalt und einer erhöhten Acidität, wenn es nach einem Verfahren gemäß Anspruch 8 hergestellt ist.

**Revendications**

1. Procédé pour modifier l'acidité et la teneur en ions d'un extrait aqueux de café, de thé ou de céréales ayant une teneur en matières solides solubles de 7 à 35% en poids par électrodialyse dans un système comprenant une paire d'électrodes et deux ou plus de deux membranes qui sont exclusivement perméables aux cations ou exclusivement perméables aux anions, dans lequel le courant de charge est séparé par une membrane du courant de résidu, ce dernier contenant une solution acide aqueuse diluée lorsque les membranes sont perméables aux cations et une solution basique aqueuse diluée lorsque les membranes sont perméables aux anions, l'application d'un champ électrique entre les électrodes de ce système provoquant une migration à travers la membrane de protons ou d'ions hydroxyle depuis le courant de résidu vers le courant de charge et de cations ou d'anions, respectivement, depuis le courant de charge vers les électrodes respectives qui les attirent.

2. Procédé suivant la revendication 1 pour la réduction de l'acidité d'un produit alimentaire tel que défini, dans lequel les membranes sont perméables aux anions et le courant résiduaire contient une solution basique diluée, l'application d'un champ électrique provoquant une migration d'ions hydroxyle depuis le courant résiduaire vers le courant de charge et une migration des anions depuis le courant de charge vers l'anode.

3. Procédé suivant la revendication 2, dans lequel l'hydroxyde présent dans le courant résiduaire est l'hydroxyde d'ammonium ou un hydroxyde de métal alcalin.

4. Procédé suivant la revendication 3, dans lequel l'hydroxyde présent dans le courant résiduaire est l'hydroxyde de potassium.

5. Procédé suivant la revendication 3 ou la revendication 4, dans lequel la concentration de l'hydroxyde de métal alcalin dans le courant résiduaire va de 0,1 à 0,5% sur base pondérale.

6. Procédé suivant la revendication 3, dans lequel la concentration de l'hydroxyde d'ammonium dans le courant résiduaire va de 2,0 à 4,0% sur base pondérale.

7. Procédé suivant la revendication 2, dans lequel le produit alimentaire est un extrait de café vert ou torréfié, un extrait de céréales, ou un produit du thé ou du café en mélange avec un produit de céréales, de chocolat ou de chicorée.

8. Procédé suivant la revendication 1, pour réduire la teneur en substances minérales ou pour accroître l'acidité d'un produit alimentaire tel que défini, dans lequel les membranes sont perméables aux cations et le courant résiduaire contient une solution acide diluée, l'application d'un champ électrique provoquant une migration de protons depuis le courant résiduaire vers le courant de charge et une migration de cations depuis le courant de charge vers la cathode.

9. Procédé suivant la revendication 8, dans lequel l'acide dilué présent dans le courant résiduaire est l'acide phosphorique.

10. Procédé suivant la revendication 9, dans lequel la concentration de l'acide phosphorique dans le courant résiduaire va de 0,1 à 0,4% sur base pondérale.

11. Procédé suivant la revendication 8, dans lequel l'acide dilué présent dans le courant résiduaire est un concentré d'évaporateur.

12. Procédé suivant la revendication 8, dans lequel le produit alimentaire est un extrait de café vert ou torréfié, de thé, un extrait de céréales et tout mélange de ces substances ou tout mélange d'une ou plusieurs de ces substances avec un jus de fruit ou un extrait végétal.

13. Procédé suivant la revendication 1, dans lequel un courant d'électrodes circule à travers les compartiments d'électrodes du système.

14. Procédé suivant la revendication 13, dans lequel le courant d'électrodes a la même composition que le courant résiduaire.

15. Procédé suivant la revendication 1, dans lequel le courant s'écoulant dans les compartiments est turbulent.

16. Procédé suivant la revendication 1, dans lequel la température de travail va de 24 à 65°C.

17. Procédé suivant la revendication 1, dans lequel le courant utilisé va de 20 à 140 ampères par mètre carré d'une simple membrane.

18. Produit alimentaire d'acidité réduite, préparé par un procédé suivant la revendication 2.

19. Produit alimentaire à teneur réduite en sels minéraux et à acidité élevée, préparé par un procédé suivant la revendication 8.